# EUROPÄISCHE PATENTSCHRIFT

(11) **EP 2 800 791 B1**
(45) Veröffentlichungstag und Bekanntmachung des Hinweises auf die Patenterteilung: **16.08.2017**
(21) Anmeldenummer: 13700477.6
(22) Anmeldetag: 03.01.2013
(51) Int. Cl.: C09J 7/04, D06M 13/10

(54) **VERFAHREN UND VORRICHTUNG ZUR HERSTELLUNG EINES HANDEINREIßBAREN TEXTILEN KLEBEBANDES**
PROCESS AND DEVICE FOR PRODUCING A HAND-TEARABLE TEXTILE ADHESIVE TAPE
PROCÉDÉ ET DISPOSITIF POUR LA PRODUCTION DE RUBANS ADHÉSIFS TEXTILES MANUELLEMENT DÉCHIRABLES

(30) Priorität: 04.01.2012 DE 102012100055
(43) Veröffentlichungstag der Anmeldung: 12.11.2014
(73) Patentinhaber: certoplast Vorwerk & Sohn GmbH, 42285 Wuppertal (DE)
(72) Erfinder: RAMBUSCH, Peter, 42115 Wuppertal (DE)
(74) Vertreter: Nunnenkamp, Jörg
(86) Internationale Anmeldenummer: PCT/EP2013/050065
(87) Internationale Veröffentlichungsnummer: WO 2013/102649

(56) Entgegenhaltungen:
- EP-A1- 0 052 363
- EP-A2- 1 431 360
- DE-A1-102005 044 942

## Beschreibung

Die Erfindung betrifft ein Verfahren zur Herstellung eines handeinreißbaren textilen Klebebandes.

Handeinreißbare textile Klebebänder werden typischerweise eingesetzt, um Kabelbündel in Automobilen zu umwickeln. Die Handeinreißbarkeit stellt in diesem Kontext sicher, dass ein Montagewerker ohne zusätzliche Hilfsmittel wie beispielweise Scheren oder Messer das solchermaßen ausgelegte Klebeband von einer zugehörigen Klebebandrolle abwickeln und problemlos von Hand in gewünschter Länge meistens quer zur Längserstreckung einreißen kann. Um die angesprochen Handeinreißbarkeit zu gewährleisten, werden im Stand der Technik verschiedene Entwicklungslinien verfolgt.

Tatsächlich beschreibt die EP 2 050 802 B1 der Anmelderin ein Mischgewebe, welches in Kettrichtung mit Polyesterfasern bzw. Polyesterfäden arbeitet und in Schussrichtung auf Baumwollfäden zurückgreift. Dadurch lässt sich das bekannte Klebeband besonders einfach in Querrichtung, das heißt Schussrichtung, einreißen.

Bei der gattungsbildenden Lehre nach der DE 10 2005 044 942 B4, von welcher die Erfindung ausgeht, wird das textile Trägerband im Falle von Polyester mit Lauge oder bei Rückgriff auf Polyamid mit Säure behandelt, um auf diese Weise die gewünschte reduzierte Faserreißfestigkeit des Trägermaterials zur Verfügung zu stellen. In der genannten Vorveröffentlichung werden allerdings nur globale Aussagen getroffen und bleiben Einzelheiten des Prozesses sowie der erreichten oder erreichbaren Reduktion der Faserreißfestigkeit insgesamt offen.

Die an dieser Stelle ebenfalls einschlägige DE 31 43 064 A1 befasst sich mit einem Velours, welches beschichtet werden kann und zuvor einer Alkalisierung unterzogen wird. Dabei werden auch verschiedene Parameter der Laugenbehandlung angesprochen, allerdings offen gelassen, ob am Ende dieser Behandlung tatsächlich die gewünschte Handeinreißbarkeit vorliegt oder erreicht werden konnte.

Die US 6 790 505 B1 befasst sich mit einem Polyestergewebeträgerband als Basis für ein Klebeband. In diesem Zusammenhang werden durch spezielle Parameterwahl des Gewebes Reißkräfte von weniger als 10 N beobachtet. Das setzt allerdings einen speziellen Webprozess voraus.

Die DE 102 59 616 A1 befasst sich mit einem Klebeband, bei welchem das Trägerband aus einem thermisch verfestigten Vlies aufgebaut ist. Durch den eingebrachten Klebstoff ist das Trägerbandmaterial derart verfestigt, dass es quer zur Längsrichtung des Trägers gut handeinreißbar sein soll, wobei Reißfestigkeiten von 15 bis 30 N/cm beobachtet werden.

Die DE 747 1 17 beschäftigt sich allgemein mit der Textilveredlung von Polyamidfasern. Hier wird im Beispiel 9 die Behandlung von Polyamidfasern mit Ameisensäure einer Temperatur von 20 bis 25°C beschrieben. Nach einer Behandlungsdauer von 3 Minuten werden die Polyamidfasern gewaschen und getrocknet. Auf diese Weise lässt sich die Festigkeit um etwa 2% bis etwa 40% verringern.

Der Stand der Technik liefert bisher lediglich Ansätze dahingehend, wie beispielsweise ein Polyestergewebeträgerband als Ausgangsmaterial zur Herstellung eines Klebebandes grundsätzlich hinsichtlich seiner Reißfestigkeit verringert werden kann. Es fehlen allerdings nach wie vor gezielte Angaben dahingehend, wie die hierbei relevanten Parameter eingestellt werden sollen und welche Reißfestigkeiten überhaupt akzeptabel sind bzw. wie stark die Reißfestigkeit verringert werden muss, um die gewünschte Handeinreißbarkeit zu erzielen. An dieser Stelle setzt die Erfindung ein.

Der Erfindung liegt das technische Problem zugrunde, ein Verfahren der eingangs beschriebenen Ausprägung so weiterzuentwickeln, dass unter Einhaltung nachvollziehbarer Kriterien auf jeden Fall die gewünschte Handeinreiß-barkeit erreicht wird.

Zur Lösung dieser technischen Problemstellung ist ein gattungsgemäßes Verfahren zur Herstellung eines handeinreißbaren textilen Klebebandes im Rahmen der Erfindung mit folgenden Verfahrensschritten ausgerüstet:
- ein textiles Trägerband wird mit einer die Fasern angreifenden Bearbeitungsflüssigkeit solange behandelt, bis seine Reißfestigkeit weniger als ca. 100 N/cm beträgt;
- das textile Trägerband wird dazu in einer Behandlungseinrichtung mit einem Flottenverhältnis von 1:20 und mehr behandelt, das heißt, die Menge an textilem Trägerband im Vergleich zur Menge an Bearbeitungsflüssigkeit im Behandlungsbad beträgt 1:20 und mehr;
- das textile Trägerband wird anschließend gewaschen und neutralisiert;
- zum Abschluss wird eine Beschichtung mit einem Kleber zumindest einseitig auf das Trägerband aufgebracht.

Im Rahmen der Erfindung kommt also zunächst einmal ein textiles Klebeband zum Einsatz, welches auf ein textiles Trägerband zurückgreift, also ein Trägerband, das aus einem flexiblen Verbund von Fasern besteht. Das heißt, im Rahmen der Erfindung werden prinzipiell mit dem Begriff "textiles Trägerband"

Gewebe, Gewirke oder aus Gestricke umfasst. Nach vorteilhafter Ausgestaltung handelt es sich bei dem textilen Trägerband im Regelfall jedoch um ein Gewebeträgerband.

Eine Reißfestigkeit von weniger als 100 N/cm wird auch schon im Stand der Technik nach der DE 20 2007 006 816 U1 als "handeinreißbar" qualifiziert. Um diese Reißfestigkeit jedoch einzustellen, greift die bekannte und vorerwähnte Lehre auf einen speziellen Gewebeträger zurück, bei dem der Titer der Längsfäden mindestens 2600 dtex/cm und der auf die Länge bezogene Titer der Querfäden wenigstens 4700 dtex cm beträgt. Außerdem wird die Fadendichte der Querfäden mit wenigstens 28 Fäden pro cm Länge angegeben.

Demgegenüber verzichtet die Erfindungslehre auf derartige Vorgaben. Vielmehr kommt es einzig und allein darauf an, das textile Trägerband und insbesondere das Gewebeträgerband mit der die Fasern angreifenden Bearbeitungsflüssigkeit gezielt zu behandeln, und zwar solange, bis das Gewebeträgerband eine Reißfestigkeit von weniger als 100 N/cm aufweist, folglich grundsätzlich handeinreißbar ist. Das gilt auch dann, wenn das solchermaßen behandelte Trägerband abschließend mit der Beschichtung mit dem Kleber einseitig oder beidseitig ausgerüstet wird. Denn die Kleberbeschichtung beeinflusst die Reißfestigkeit kaum, das heißt zu weniger als 10 %.

Die beschriebene Reißfestigkeit von weniger als 100 N/cm wird im Rahmen der Erfindung üblicherweise in Längsrichtung, also Kettrichtung des Gewebeträgerbandes, beobachtet. Dadurch kann das fragliche Gewebeträgerband und selbstverständlich auch das hieraus hergestellte erfindungsgemäße textile Klebeband unschwer quer zur Kettrichtung, in Schussrichtung, eingerissen werden. So wird meistens gearbeitet.

Der zuvor beschriebene Behandlungsprozess mit der Bearbeitungsflüssigkeit wird darüber hinaus nach vorteilhafter Ausgestaltung so geführt und gesteuert, dass sich die Reißfestigkeit des behandelten textilen Trägerbandes im Vergleich zum Anlieferungszustand um wenigstens ca. 5 % verringert, meistens um ca. 10 % oder noch mehr. Im Allgemeinen kommt an dieser Stelle ein spezielles Gewebeträgerband im Rahmen der Erfindung zum Einsatz, nämlich ein Polyestergewebeträgerband .

Solche Polyestergewebeträgerbänder weisen besondere Vorteile beim anschließenden Einsatz des erfindungsgemäßen Klebebandes zum Umwickeln von Kabelsätzen in Automobilen auf. So verfügen Polyestergewebeträgerbänder über eine hohe Abriebfestigkeit sowie gute elektrische Isolationseigenschaften gepaart mit signifikanter Dimensionsstabilität. Durch die im Rahmen der Erfindung erfolgende Behandlung mit der die Fasern angreifenden Bearbeitungsflüssigkeit wird nun noch die im Anlieferungszustand an sich schlechte oder manchmal gar nicht gegebene Handeinreißbarkeit zur Verfügung gestellt, weil die Reißfestigkeit auf Werte von weniger als 100 N/cm (in Längsrichtung des Klebebandes) eingestellt wird. Tatsächlich verfügen Polyestergewebeträgerbänder nämlich typischerweise über Reißfestigkeiten von deutlich mehr als 100 N/cm im Anlieferungszustand. Hierin sind die wesentlichen Vorteile zu sehen.

Nach vorteilhafter Ausgestaltung kann das textile Trägerband mit der Bearbeitungsflüssigkeit in einem kontinuierlichen oder diskontinuierlichen Prozess behandelt werden. Meistens wird das textile Trägerband kontinuierlich mit einer vorgegebenen Geschwindigkeit und wenigstens einfach durch ein Behandlungsbad bzw. allgemein eine Behandlungseinrichtung hindurchgeführt. Dabei haben sich Geschwindigkeiten von ca. 20 m/min, insbesondere 30 m/min und
mehr als günstig erwiesen. Vorzugsweise kann sogar mit einer Geschwindigkeit von 40 m/min gearbeitet werden.

Des Weiteren ist die Auslegung in diesem Kontext meistens so getroffen, dass das textile Trägerband für eine Behandlungszeit von wenigstens 4 Minuten mit der Bearbeitungsflüssigkeit behandelt wird. Grundsätzlich kann auch mit einer längeren Behandlungszeit gearbeitet werden. Außerdem wird die Behandlung in dem Behandlungsbad mit einem Flottenverhältnis von ca. 1:20 und mehr durchgeführt. Das heißt, das textile Trägerband wird im Behandlungsbad mit dem vorerwähnten Flottenverhältnis von ca. 1:20 und mehr behandelt.

Das Flottenverhältnis drückt wie üblich das Verhältnis der Menge an textilem Trägerband im Vergleich zur Menge an Bearbeitungsflüssigkeit im Behandlungsbad aus. Bei der kontinuierlichen Behandlung des textilen Trägerbandes kann mit einer Rollenkufe gearbeitet werden, die im Behandlungsbad angebracht sein mag. Solche Rollenkufen sind an sich bekannt und dadurch ausgezeichnet, dass bei ihnen das textile Trägerband über zumindest zwei Reihen von dicht nebeneinander und mit Abstand übereinander angeordneten Umlenkwalzen mäanderförmig geführt wird. Auf diese Weise wird einerseits eine relativ lange Verweilzeit bzw. Behandlungszeit des textilen Trägerbandes im Behandlungsbad erreicht, und zwar andererseits bei geringen Gehäuseabmessungen. Dadurch reicht es meistens aus, das Trägerband lediglich einfach, das heißt im Rahmen eines Durchganges, durch das Behandlungsbad hindurchzuführen, wenngleich natürlich auch mehrfache Behandlungen möglich sind.

Nach der Behandlung des textilen Trägerbandes im Behandlungsbad durchläuft das textile Trägerband im Allgemeinen einen Dämpfer mit Sattdampf. Hierbei handelt es sich um einen Behandlungsraum, welcher mit gesättigtem Wasserdampf beaufschlagt wird, so dass je nach Größe dieses Behandlungsraumes und folglich der Verweilzeit des textilen Trägerbandes innerhalb des Behandlungsraumes beim kontinuierlichen Prozess die Einwirkzeit der Bearbeitungsflüssigkeit auf das textile Trägerband verändert werden kann.

Alternativ zu dem zuvor primär beschriebenen kontinuierlichen Prozess ist es aber auch möglich, das textile Trägerband mit der Bearbeitungsflüssigkeit einem diskontinuierlichen Prozess zu unterziehen. Hierbei wird das textile Trägerband meistens im Zuge eines Tauchverfahrens mit einer steuerbaren Menge der Bearbeitungsflüssigkeit benetzt. Danach kann das feuchte Trägerband aufgerollt und an einer Verweilstation unter Berücksichtigung der bereits angesprochenen Behandlungszeit beispielsweise permanent gedreht werden. Auf diese Weise wird gewährleistet, dass die Bearbeitungsflüssigkeit das textile Trägerband homogen behandelt und sich nicht beispielsweise auf einer Seite des Trägerbandes infolge der Schwerkraft sammelt. - Im Rahmen der Erfindung wird jedoch typischerweise nach dem kontinuierlichen Prozess gearbeitet, weil dieser mit Kostenvorteilen bei der Herstellung verbunden ist.

Bei der eingesetzten Bearbeitungsflüssigkeit für das textile Trägerband handelt es sich vorteilhaft um eine Lauge oder eine Säure. Das hängt vom Werkstoff für das textile Trägerband ab. Handelt es sich bei dem textilen Trägerband um ein Polyestergewebeträgerband, so wird dieses im Allgemeinen alkalisiert, und zwar mit Natronlauge. Kommt dagegen als Trägerband bzw. Gewebeträgerband ein solches auf Polyamidbasis zum Einsatz, so wird mit einer Säure und insbesondere Ameisensäure gearbeitet.

Da Polyestergewebeträgerbänder im Allgemeinen Kostenvorteile gegenüber Polyamidgewebeträgerbändern aufweisen, wird im Folgenden primär die Behandlung solcher Polyestergewebeträgerbänder mit Natronlauge im Zuge der

Alkalisierung beschrieben. Die Alkalisierung bezeichnet dabei wie üblich den Vorgang der Erhöhung des ph-Wertes, so dass das Milieu insgesamt alkalischer wird, was im Allgemeinen durch den Einsatz von Natronlauge gelingt. Dabei kommt meistens eine Natronlauge mit einer Konzentration von wenigstens 10 g/l zum Einsatz. Grundsätzlich kann auch mit höheren Konzentrationen von 20 g/l bis zu ca. 40 g/l gearbeitet werden. Das heißt, die Konzentration der erfindungsgemäß besonders vorteilhaft eingesetzten Natronlauge bewegt sich typischerweise im Bereich von 10 g/l bis zu ca. 40 g/l.

Im Ergebnis wird ein Verfahren zur Herstellung eines handeinreißbaren textilen Klebebandes zur Verfügung gestellt. Dabei offeriert die Erfindung zum ersten Mal nachvollziehbare Parameter, mit deren Hilfe die Reißfestigkeit beispielsweise bei Polyestergewebeträgerbändern um wenigstens ca. 5 % verringert werden kann. Als Folge hiervon werden Reißfestigkeiten von typischerweise weniger 100 N/cm beobachtet, die das solchermaßen hergestellte Klebeband insgesamt handeinreißbar gestalten.

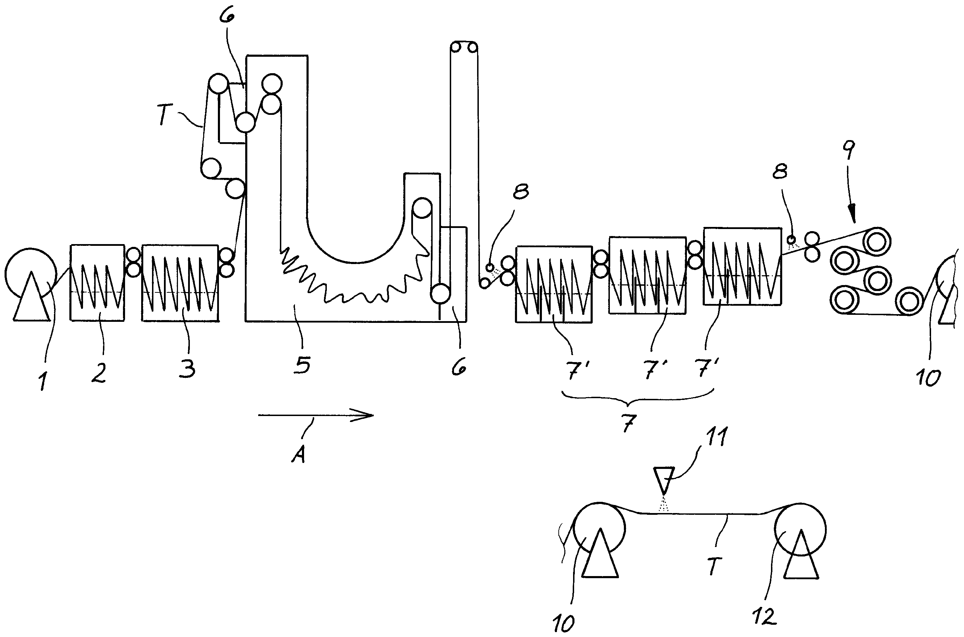

Im Folgenden wird die Erfindung anhand einer lediglich ein Ausführungsbeispiel darstellenden Zeichnung näher erläutert. Die einzige Figur zeigt eine Vorrichtung zur Herstellung eines handeinreißbaren textilen Klebebandes.

In der Figur ist eine Vorrichtung dargestellt, mit deren Hilfe grundsätzlich ein Klebeband entsprechend dem geschützten Verfahren produziert werden kann. Zu diesem Zweck verfügt die Vorrichtung zunächst einmal über eine Vorratseinheit 1, auf welcher ein textiles Trägerband

T aufgewickelt und der nachfolgend noch zu beschreibenden Behandlung zugeführt wird. Das textile Trägerband T mag auf der Vorratseinheit 1 in Gestalt einer textilen Flächenbahn vorliegen, die am Ende des noch zu beschreibenden Herstellungsprozesses in einzelne Klebebandstreifen vorgegebener Breite in Längsrichtung geschnitten wird.

Der Vorratseinheit 1 für das textile Trägerband T folgt in der durch einen Pfeil angedeuteten Arbeitsrichtung A eine Behandlungseinrichtung 3, in welcher das von der Vorratseinheit 1 zugeführte textile Trägerband T mit einer Bearbeitungsflüssigkeit 4 behandelt wird. Man erkennt, dass die Bearbeitungsflüssigkeit 4 einen gestrichelt angedeuteten Flüssigkeitsspiegel in der Behandlungseinrichtung 3 bzw. dem dortigen Behandlungsbad beschreibt, wobei das Trägerband T durch die Bearbeitungsflüssigkeit 4 bzw. den ausgebildeten Flüssigkeitsspiegel mäanderförmig hindurchgeführt wird. Dazu ist die Behandlungseinrichtung 3 mit Rollenkufen ausgerüstet, welche das textile Trägerband T über entsprechende Umlenkrollen mehrfach durch die Bearbeitungsflüssigkeit 4 mäanderförmig hindurchführen.

In der Behandlungseinrichtung 3 wird das textile Trägerband T mit der Bearbeitungsflüssigkeit 4 solange behandelt, bis seine Reißkraft bzw. Reißfestigkeit weniger als 100 N/cm beträgt. Tatsächlich greift die Bearbeitungsflüssigkeit 4 die Fasern des textilen Trägerbandes T an.

Bei dem textilen Trägerband T handelt es sich im Ausführungsbeispiel um ein Polyestergewebeträgerband, welches mit Natronlauge als Bearbeitungsflüssigkeit alkalisiert wird. Die Natronlauge liegt in einer Konzentration von wenigstens 10 g/l vor und verfügt typischerweise über eine Temperatur von wenigstens ca. 50 °C und mehr. Maximal mag die Konzentration der Natronlauge bei 40 g/l liegen und die Temperatur bei ca. 80°C. Außerdem erfolgt die Behandlung des textilen Trägerbandes T in der Behandlungseinrichtung 3 für eine Dauer von wenigstens 4 Minuten.

Das heißt, die Behandlungszeit des textilen Trägerbandes T innerhalb der Behandlungseinrichtung 3 ist auf zumindest 4 Minuten oder mehr eingestellt.

Diese Behandlungszeit ergibt sich anhand der Geschwindigkeit, mit welcher das textile Trägerband T durch die in der Figur dargestellte Vorrichtung in der Arbeitsrichtung A hindurchgeführt wird einerseits. Diese Geschwindigkeit beträgt ca. 10 m/min und kann auf ca. 40 m/min gesteigert werden.

Auf diese Weise lässt sich andererseits je nach räumlicher Ausdehnung bzw. Länge der Behandlungseinrichtung 3 die Behandlungszeit von 4 Minuten oder mehr vorgeben und einstellen. Insgesamt werden in diesem Zusammenhang Reißfestigkeiten von weniger als 100 N/cm am Ende der Behandlungseinrichtung 3 und eine Verringerung der Reißfestigkeit im Vergleich zum Anlieferungszustand von wenigstens 5 % dann erreicht, wenn mit einer Geschwindigkeit von ca. 40 m/min in der Arbeitsrichtung A gearbeitet wird, wobei die Temperatur der Bearbeitungsflüssigkeit 4 bzw. der Natronlauge mit einer Konzentration von 40 g/l bei mehr als 50 °C, vorzugsweise bei ca. 80 °C angesiedelt ist. Die Verweilzeit beträgt in diesem Fall ca. 4 Minuten.

Als Folge hiervon wird beispielsweise die Reißfestigkeit des textilen Trägerbandes T im Anlieferungszustand bzw. im Zustand auf der Vorratseinheit 1 von in etwa 105 N/cm auf Werte von ca. 100 N/cm bzw. 95 N/cm und weniger am Ende der Behandlungseinrichtung 3 reduziert. Daraus erklärt sich eine prozentuale Abnahme der Reißfestigkeit von wenigstens 5 %, im Beispielfall von 10 % und mehr.

Die beschriebene Verringerung der Reißfestigkeit lässt sich im Kern auf die bekannte Tatsache zurückführen, dass beim beschriebenen Alkalisierungsprozess innerhalb der Behandlungseinrichtung 3 insgesamt der Durchmesser der einzelnen Fasern durch die an den Fasern angreifende Bearbeitungsflüssigkeit 4 verringert wird. Denn das Alkalisieren führt zu einer Abschälung des textilen Trägerbandes T an seiner Oberfläche, was chemisch gesehen einen Abbau der Polyesterketten durch eine basenkatalysierte Verseifung darstellt.

Dadurch werden strukturelle Veränderungen des textilen Trägerbandes T bei gleichzeitigem Masseverlust der einzelnen Fasern beobachtet.

Der Behandlungseinrichtung 3 in Arbeitsrichtung A vorgeschaltet ist eine Reinigungsstation 2. Diese dient insbesondere dazu, von dem textilen Trägerband T etwaige und durch den vorgeschalteten Webprozess noch anhaftende Öle oder Fette zu entfernen. Wie bereits erläutert, ist die Behandlungseinrichtung 3 insgesamt und im Ausführungsbeispiel als Alkalisierungseinheit 3 ausgebildet. Grundsätzlich kann auch die Reinigungsstation 2 ähnlich wie die Behandlungseinrichtung bzw. Alkalisierungseinheit 3 arbeiten. In diesem Fall müssen die Behandlungseinrichtung 3 und die Reinigungsstation 2 als Einheit 2, 3 aufgefasst werden, welche insgesamt für die zuvor beschriebenen Eigenschaften des textilen Trägerbandes T ausgangsseitig dieser Einheit 2, 3 bzw. ausgangsseitig der Behandlungseinrichtung 3 sorgt. Das ist selbstverständlich nicht zwingend.

In Arbeitsrichtung A folgt auf die Behandlungseinrichtung 3 ein Dämpfer bzw. eine Dämpfungseinrichtung 5. Die Dämpfungseinrichtung 5 verfügt über einen Behandlungsraum, welcher mit Sattdampf gefüllt ist, also mit gesättigtem Wasserdampf. Eingangsseitig und ausgangsseitig dieses Behandlungsraumes der Dämpfungseinrichtung 5 sind jeweils Dichtungen 6 vorgesehen, die im Ausführungsbeispiel als Flüssigkeitsdichtungen ausgelegt sind.

Wie einleitend bereits beschrieben, sorgt die Dämpfungseinrichtung 5 dafür, dass die Behandlungszeit des textilen Trägerbandes T insgesamt variiert werden kann. Je länger das textile Trägerband T im Behandlungsraum der Dämpfungseinrichtung 5 verbleibt, umso kürzer ist letztlich die Behandlungszeit bemessen, weil in der Dämpfungseinrichtung der das textile Trägerband T beaufschlagende gesättigte Wasserdampf im Kern dafür sorgt, dass die Wirkung der Bearbeitungsflüssigkeit respektive Natronlauge 4 auf das textile Trägerband T verringert - gedämpft - wird. Folgerichtig bezieht sich die Bearbeitungszeit mit der Bearbeitungsflüssigkeit 4 letztlich einzig auf die Zeit, innerhalb derer das textile Trägerband T in der Behandlungseinrichtung 3 alleine verweilt.

Nach Durchlaufen der Dämpfungseinrichtung 5 gelangt das textile Trägerband T in eine Wascheinheit 7, die sich aus einzelnen Waschkammern 7' zusammensetzt. Durch die einzelnen Waschkammern 7' wird das textile Trägerband T erneut mäanderförmig geführt, wobei in der Wascheinheit 7 nicht nur die Bearbeitungsflüssigkeit 4 von dem textilen Trägerband T abgespült wird, sondern zugleich das Trägerband T eine Neutralisierung erfährt. Denn zumindest in der ausgangsseitigen Waschkammer 7' sind die Verhältnisse so eingestellt, dass dort ein ph-Wert von ca. 7 vorliegt, also insgesamt ph-neutrale Bedingungen beobachtet werden. Die Wascheinheit 7 verfügt eingangsseitig und ausgangs-seitig noch über Sprüheinrichtungen 8, mit deren Hilfe Wasser direkt am Eingang und am Ausgang auf das textile Trägerband T aufgesprüht wird.

An die Wascheinheit 7 zum Waschen und Neutralisieren des textilen Trägerbandes T nach der Behandlung mit der Bearbeitungsflüssigkeit 4 schließt sich eine Trocknungseinheit 9 an. Hierbei mag mit einer Zylindertrocknung gearbeitet werden. Tatsächlich verfügt die Trocknungseinheit 9 über mehrere beheizte Zylinder, die beispielsweise eine Temperatur von ca. 100 °C bis 130 °C aufweisen können. Über diese einzelnen Zylinder der Trocknungseinheit 9 wird
das textile Trägerband T nach Verlassen der Wascheinheit 7 mäanderförmig geführt und getrocknet. Zum Abschluss wird das getrocknete Trägerband T auf eine Aufwickeleinheit 10 aufgewickelt.

Von dieser Aufwickeleinheit 10 ausgehend, kann das textile Trägerband T dann in einem weiteren Schritt zumindest einseitig mit einem Kleber beschichtet werden. Hierzu ist im Ausführungsbeispiel eine Beschichtungseinrichtung 1 1 vorgesehen, die den fraglichen Kleber beispielsweise als Hot-Melt durch Aufsprühen auf eine Seite des textilen Trägerbandes T aufbringt. Das ist selbstverständlich nur beispielhaft zu verstehen. Das solchermaßen beschichtete Trägerband T kann anschließend in Längsrichtung geschnitten und zu Klebebandrollen 12 aufgewickelt werden.

Wie die einzige Figur bereits andeutet, können einzelne Phasen der Herstellung des erfindungsgemäßen handeinreißbaren textilen Klebebandes örtlich und zeitlich voneinander getrennt durchgeführt werden. So ist es möglich, zunächst das textile Trägerband T zu weben. Dieses textile Trägerband T wird dann auf der Vorratseinheit 1 für die weitere Bearbeitung zur Verfügung gestellt. In einem ergänzenden zweiten Herstellungsschritt erfolgt der beschriebene Alkalisierungsprozess mit dem anschließenden Waschen, Neutralisieren und Trocknen, an dessen Ende das handeinreißbare textile Trägerband T auf der Aufwickeleinheit 10 zur Verfügung steht. In einem weiteren dritten Schritt kann dann dieses handeinreißbare textile Trägerband T mit dem Kleber zumindest einseitig beschichtet werden, wie dies im oberen Teil der Figur schematisch dargestellt ist. Am Ende dieses Prozesses stehen die einzelnen Klebebandrollen 12 zur Verfügung. Selbstverständlich lassen sich sämtliche Prozesse auch in einer kontinuierlichen Linie realisieren.

Bei dem eingesetzten textilen Trägerband handelt es sich wie bereits erläutert um Polyestergewebeträgerband. Dieses mag schwarz eingefärbt sein. Seine Luftdurchlässigkeit beträgt typischerweise weniger als 500 mPa/sek. (EN ISO 9237: 1995; 2,0 mbar). Die Reißdehnung in Längsrichtung ist bei ca. 25 plus/minus 5 % angesiedelt (DIN EN 14410: 2003). Die Dicke des mit Hilfe dieses Trägerbandes T hergestellten Klebebandes liegt im Bereich von ca. 0,1 mm. Das Flächengewicht beträgt in etwa 70 g/m².

Das Gewebe setzt sich aus ca. 31 Kettfäden/cm und ca. 27 Schussfäden/cm zusammen. Die Feinheit beträgt mehr als 2500 dtex cm für die Kettfäden. Vergleichbares gilt für die Schussfäden.

Es sollte schlussendlich noch betont werden, dass die Behandlung mit der Bearbeitungsflüssigkeit 4 in der Behandlungseinrichtung 3 so gesteuert wird, dass das textile Trägerband T im Wesentlichen ausgangsseitig der Behandlungseinrichtung 3 eine Reißfestigkeit von weniger als 100 N/cm aufweist. Um dies im Detail zu erreichen, wird im Rahmen der Erfindung größtenteils empirisch vorgegangen, indem die Behandlungszeit innerhalb der Behandlungseinrichtung 3, die Konzentration der Bearbeitungsflüssigkeit bzw. Natronlauge 4, deren Temperatur und die Geschwindigkeit des Durchlaufs in der Arbeitsrichtung A unter Berücksichtigung der zuvor angegebenen Parameter eingestellt und entsprechende Reißfestigkeiten gemessen werden.

Grundsätzlich ist es aber auch möglich, beispielsweise die Geschwindigkeit des textilen Trägerbandes T in der Arbeitsrichtung A im Sinne einer Regelung zu verändern. Dann wird eingangsseitig der Behandlungseinrichtung 3 die Reißfestigkeit des textilen Trägerbandes T im Anlieferungszustand gemessen und ebenso die Reißfestigkeit des textilen Trägerbandes T nach Passieren der Behandlungseinrichtung 3. Je nachdem, ob die Reißfestigkeit ausgangsseitig
der Behandlungseinrichtung 3 weniger als 100 N/cm beträgt, kann dann die Durchlaufgeschwindigkeit des textilen Trägerbandes T in der Arbeitsrichtung A erhöht und damit die Produktivität gesteigert werden.

Ist dagegen die Reißfestigkeit des textilen Trägerbandes T ausgangsseitig der Behandlungseinrichtung 3 oberhalb von 100 N/cm angesiedelt, so führt diese

Messung unmittelbar dazu, dass die Durchlaufgeschwindigkeit des textilen Trägerbandes T in der Arbeitsrichtung A verringert wird. Als Folge hiervon steigt die Bearbeitungszeit bzw. Verweilzeit innerhalb der Behandlungseinrichtung 3 an und ist damit zu rechnen, dass bei ansonsten gleichbleibenden Parametern auf diese Weise die Reißfestigkeit verringert wird.

Die Durchlaufgeschwindigkeit lässt sich in diesem Kontext sukzessive soweit verringern, bis die Reißfestigkeit ausgangsseitig der Behandlungseinrichtung 3 den gewünschten Wert von weniger als 100 N/cm aufweist. - Vergleichbar kann auch gearbeitet werden, wenn es darum geht, die prozentuale Verringerung der Reißkraft von mindestens 5 % ausgangsseitig der Behandlungseinrichtung 3 im Vergleich zum Anlieferungszustand auf der Vorratseinheit 1 im Sinne einer Regelung einzustellen

## Patentansprüche

1. Verfahren zur Herstellung eines handeinreißbaren textilen Klebebandes (T) mit folgenden Verfahrensschritten:
1.1) ein textiles Trägerband (T) wird mit einer die Fasern angreifenden Bearbeitungsflüssigkeit (4) solange behandelt, bis seine Reißfestigkeit weniger als 100 N/cm beträgt;
1.2) das textile Trägerband (T) wird dazu in einer Behandlungseinrichtung (3) mit einem Flottenverhältnis von 1:20 und mehr behandelt, das heißt die Menge an textilem Trägerband (T) im Vergleich zur Menge an Bearbeitungsflüssigkeit in dem Behandlungsbad beträgt 1:20 und mehr;
1.3) das textile Trägerband (T) wird anschließend gewaschen und neutralisiert;
1.4) zum Abschluss wird eine Beschichtung mit einem Kleber zumindest einseitig auf das Trägerband (T) aufgebracht.

2. Verfahren nach Anspruch 1 , **dadurch gekennzeichnet, dass** das textile Trägerband (T) mit der Bearbeitungsflüssigkeit (4) in einem kontinuierlichen oder diskontinuierlichen Prozess behandelt wird.

3. Verfahren nach Anspruch 2, **dadurch gekennzeichnet, dass** das textile Trägerband (T) kontinuierlich mit einer vorgegebenen Geschwindigkeit wenigstens einfach durch eine Behandlungseinrichtung (3) hindurchgeführt wird.

4. Verfahren nach einem der Ansprüche 1 bis 3, **dadurch gekennzeichnet, dass** das textile Trägerband (T) mit einer Lauge oder Säure als Bearbeitungsflüssigkeit (4) behandelt wird.

5. Verfahren nach einem der Ansprüche 1 bis 4, **dadurch gekennzeichnet, dass** die Bearbeitungsflüssigkeit (4) eine Temperatur von 50 °C und mehr aufweist.

6. Verfahren nach einem der Ansprüche 1 bis 5, **dadurch gekennzeichnet, dass** als textiles Trägerband (T) ein Gewebeträgerband aus Kunststofffäden eingesetzt wird.

7. Verfahren nach Anspruch 6, **dadurch gekennzeichnet, dass** es sich bei dem textilen Trägerband (T) um ein Polyestergewebeträgerband handelt.

8. Verfahren nach Anspruch 7, **dadurch gekennzeichnet, dass** das Polyestergewebeträgerband alkalisiert wird.

9. Verfahren nach Anspruch 8, **dadurch gekennzeichnet, dass** das Polyestergewebeträgerband mit Natronlauge alkalisiert wird.

10. Verfahren nach Anspruch 9, **dadurch gekennzeichnet, dass** eine Natronlauge mit einer Konzentration von wenigstens 10 g/l eingesetzt wird.

11. Verfahren nach einem der Ansprüche 1 bis 10, **dadurch gekennzeichnet, dass** das textile Trägerband (T) wenigstens 4 Minuten an Behandlungszeit mit der Bearbeitungsflüssigkeit (4) behandelt wird.

## Claims

1. A method for producing a hande tearable textile adhesive tape (T) comprising the following method steps:
1.1) a textile carrier tape (T) is treated with a processing fluid (4) which weakens the fibres until the tear strength thereof is less than 100 N/cm;
1.2) for this purpose, the textile carrier tape (T) is treated in a treatment apparatus (3) with a liquor ratio of 1:20 and more, that is to say the textile carrier tape (T) is present in the treatment bath in a quantity of 1:20 and more relative to the quantity of processing fluid;
1.3) the textile carrier tape (T) then washed and neutralised;
1.4) finally, a coating with an adhesive is applied to at least one side of the carrier tape (T).

2. Method according to claim 1, **characterised in that** the textile carrier tape (T) is treated with the processing fluid (4) in a continuous or discontinuous process.

3. Method according to claim 2, **characterised in that** the textile carrier tape (T) is passed at least once through a treatment apparatus (3) continuously at a predetermined speed.

4. Method according to any one of claims 1 to 3, **characterised in that** the textile carrier tape (T) is treated with an alkali or acid as the processing fluid (4).

5. Method according to any one of claims 1 to 4, **characterised in that** the processing fluid (4) has a temperature of 50 °C and more.

6. Method according to any one of claims 1 to 5, **characterised in that** a fabric carrier tape made of synthetic fibres is used as the textile carrier tape (T).

7. Method according to claim 6, **characterised in that** the textile carrier tape (T) is a polyester fabric carrier tape.

8. Method according to claim 7, **characterised in that** the polyester fabric carrier tape is alkalised.

9. Method according to claim 8, **characterised in that** the polyester fabric carrier tape is alkalised with sodium hydroxide solution.

10. Method according to claim 9, **characterised in that** a sodium hydroxide solution in a concentration of at least 10 g/l is used.

11. Method according to any one of claims 1 to 10, **characterised in that** the textile carrier tape (T) is treated with the processing fluid (4) for a treatment time of at least 4 minutes.

## Revendications

1. Procédé pour la fabrication d'une bande adhésive déchirable à la main (T) avec les étapes de procédé suivantes :
1.1) une bande de support textile (T) est traitée avec un liquide de traitement attaquant les fibres (4) jusqu' à ce que sa résistance à la déchirure soit inférieure à 100N/cm,
1.2) la bande de support textile (T) est traitée à cet effet dans un système de traitement (3) avec un rapport du bain de 1:20 et plus, c'est-à-dire que la quantité en bande de support textile (T) en comparaison de la quantité en liquide de traitement dans le bain de traitement est de 1:20 et plus,
1.3) la bande de support textile (T) est ensuite lavée et neutralisée,
1.4) pour terminer, un revêtement avec un adhésif est appliqué au moins d'un côté sur la bande de support (T).

2. Procédé selon la revendication 1, **caractérisé en ce que** la bande de support textile (T) est traitée avec le liquide de traitement (4) dans un processus continu ou discontinu.

3. Procédé selon la revendication 2, **caractérisé en ce que** la bande de support textile (T) est passée en continu au moins simplement à travers un système de traitement (3) à une vitesse prédéfinie.

4. Procédé selon l'une quelconque des revendications 1 à 3, **caractérisé en ce que** la bande de support textile (T) est traitée avec une lessive ou un acide en tant que liquide de traitement (4).

5. Procédé selon l'une quelconque des revendications 1 à 4, **caractérisé en ce que** le liquide de traitement (4) comporte une température de 50°C et plus.

6. Procédé selon l'une quelconque des revendications 1 à 5, **caractérisé en ce que** l'on utilise une bande de support en tissu composé de fils de matière plastique comme bande de support textile (T).

7. Procédé selon la revendication 6, **caractérisé en ce que** concernant la bande de support textile (T), il s'agit d'une bande de support de tissu polyester.

8. Procédé selon la revendication 7, **caractérisé en ce que** la bande de support de tissu polyester est alcalinisée.

9. Procédé selon la revendication 8, **caractérisé en ce que** la bande de support de tissu polyester est alcalinisée avec une lessive de soude.

10. Procédé selon la revendication 9, **caractérisé en ce qu'**on utilise une lessive de soude à une concentration d'au moins 10 g/l.

11. Procédé selon l'une quelconque des revendications 1 à 10, **caractérisé en ce que** la bande de support textile (T) est traitée au moins 4 minutes en temps de traitement avec le liquide de traitement (4).
